# EUROPÄISCHE PATENTANMELDUNG

(11) **EP 3 228 842 A1**
(43) Veröffentlichungstag der Anmeldung: **11.10.2017**
(21) Anmeldenummer: 17165161.5
(22) Anmeldetag: 06.04.2017
(51) Int. Cl.: F02C 6/00, F02C 7/141, F02C 7/36

(54) **VERFAHREN UND VORRICHTUNG ZUR VERBESSERTEN NUTZUNG DER IN EINEM GASFÖRMIGEN MEDIUM ENTHALTENEN WÄRMEENERGIE**

(30) Priorität: 07.04.2016 DE 102016106389
(71) Anmelder: Bauer, Gerd, Chappaqua, NY 10514 (US)
(72) Erfinder: Bauer, Gerd, Chappaqua, NY 10514 (US)
(74) Vertreter: WSL Patentanwälte Partnerschaft mbB

(57) **Zusammenfassung**

Die vorliegende Erfindung betrifft Verfahren zur Nutzung der im Abgas einer Verbrennungskraftmaschine enthaltenen Abwärme, mit einer Turbine (20). Um eine Vorrichtung und ein Verfahren zum Betrieb derselben zu schaffen, die unmittelbar zusätzliche Antriebsenergie liefert, welche ansonsten als Abwärme verloren gehen würde, wird erfindungsgemäß vorgeschlagen, dass die Turbine eine inverse Turbine ist, die dem Abgasausgang der Verbrennungskraftmaschine nachgeschaltet ist, und die eingangsseitig aus einer Expansionsstufe (23) und ausgangsseitig aus einem nachfolgenden Verdichter (21) besteht, wobei die Expansionsstufe und der Verdichter der inversen Turbine so ausgelegt sind, dass der nachgeschaltete Verdichter der inversen Turbine am Ausgang der Expansionsstufe (23 einen Unterdruck (p1) unterhalb des Umgebungsdruckes (p0) erzeugt, wobei der Ausgang (2b) des Verdichters (2) auf dem Niveau des Umgebungsdrucks liegt und der Verdichter der Inversen Turbine durch die Turbine angetrieben wird.

## Beschreibung

Die vorliegende Erfindung betrifft ein Verfahren und eine Vorrichtung zur Nutzung der in einem gasförmigen Medium enthaltenen Wärmeenergie, mit einer von den Abgasen angetriebene Turbine.

Bei praktisch allen technischen Prozessen entsteht Abwärme, insbesondere in Verbrennungskraftmaschinen, deren Abgas in der Regel noch hohe Temperaturen und auch kinetische Energie in Form von Strömungsgeschwindigkeit bzw. Druckgefälle in einem Abgasrohr aufweist.

Versuche zur mindestens teilweisen Nutzung dieser in der Abwärme enthaltenen Energie als Antriebsenergie sind in der Vergangenheit häufig an praktischen Erwägungen gescheitert. Beispielsweise müsste man bei einem Hubkolbenmotor die Kolben und Zylinderlänge drastisch vergrößern, um die Temperatur der Verbrennungsgase vor dem Auslass stärker abzukühlen und Ihre Strömungsgeschwindigkeit zu reduzieren. Dies hat wiederum Folgen für die nachfolgende Verdichtung im Zylinder und für die Größe bewegter Teile, was im Ergebnis den Motor teurer und eine Effizienzsteigerung und bessere Ausnutzung des Brennstoffes zumindest teilweise wieder zunichtemacht.

Die vorliegende Erfindung verfolgt demgegenüber den Ansatz, die in dem Arbeitsgas einer Verbrennungskraftmaschine enthaltene Energie durch ein zusätzliches Aggregat besser zu nutzen.

Grundsätzlich ist ein nachgeschaltetes Aggregat bei Motoren beispielsweise in Form eines Abgasturboladers bekannt, bei welchem heiße Abgase eine Turbine antreiben, die ihrerseits einen Verdichter antreibt, der zusätzliche Verbrennungsluft unter höherem Druck in den Verbrennungsraum presst.

Dies bewirkt eine effizientere Verbrennung und steigert den Wirkungsgrad eines Motors, belastet die Motorkomponenten allerdings auch stärker. Funktionell liegt dabei der Verdichter vor dem Einlass der Verbrennungskraftmaschine, um den Druck des Gases, insbesondere der Verbrennungsluft, beim Eintritt in den Einlass der Maschine zu erhöhen. Dies erhöht zwar die Motorleistung, aber auch den Brennstoffverbrauch, allerdings in geringerem Maße als die Leistung, so dass ein Motor mit Turbolader kleiner dimensioniert werden kann und bei gleicher Leistung weniger Kraftstoff benötigt.

Die Turbine ist in dem Arbeitsgasstrom der eigentlichen Verbrennungskraftmaschine und dem Verdichter nachgeschaltet, wobei die daraus gewonnene Energie dazu dient den Verdichter anzutreiben. Abgesehen von einer möglicherweise vorgesehenen teilweisen Abgasrückführung werden jedoch die durch die Turbine strömenden Abgase als solche durch den Verdichter nicht erneut verdichtet.

Demgegenüber liegt der vorliegenden Erfindung die Aufgabe zu Grunde, eine Vorrichtung für eine Verbrennungskraftmaschine und ein Verfahren zum Betrieb der Vorrichtung zu schaffen, die unmittelbar zusätzliche Antriebsenergie liefert, welche ansonsten als Abwärme verloren gehen würde, und zwar ohne den Brennstoffverbrauch zu erhöhen..

Hinsichtlich des Verfahrens wird diese Aufgabe dadurch gelöst, dass das Abgas eine inverse Turbine (20) beaufschlagt, die eingangsseitig aus einer Expansionsstufe (23) und ausgangsseitig aus einem nachfolgenden Verdichter (21) besteht, wobei die Expansionsstufe und der Verdichter der inversen Turbine in der Weise betrieben werden, dass der nachgeschaltete Verdichter der inversen Turbine am Ausgang der Expansionsstufe (23) einen Unterdruck (p1) unterhalb des Umgebungsdruckes (p0) erzeugt, wobei der Ausgang (2b) des Verdichters (21) auf dem Niveau des Umgebungsdrucks liegt und der Verdichter durch die Turbine angetrieben wird.

Eine solche Betriebsweise erreicht man beispielsweise durch eine entsprechende Dimensionierung von Expansionsstufe und Verdichter oder auch durch geeignete Anpassung der Drehzahlen dieser Aggregate.
Hinsichtlich der Vorrichtung wird diese Aufgabe dadurch gelöst dass dem Abgasausgang (1 b) der Verbrennungskraftmaschine eine inverse Turbine nachgeschaltet ist, die eingangsseitig aus einer Expansionsstufe (23) und ausgangsseitig aus einem nachfolgenden Verdichter (21) besteht, wobei die Expansionsstufe und der Verdichter der inversen Turbine so ausgelegt sind, dass der nachgeschaltete Verdichter der inversen Turbine am Ausgang der Expansionsstufe (23 einen Unterdruck (p1) unterhalb des Umgebungsdruckes (p0) erzeugt, wobei der Ausgang (2b) des Verdichters (2) auf dem Niveau des Umgebungsdrucks liegt und der Verdichter der Inversen Turbine durch die Expansionsstufe angetrieben wird.

Für die Anwendung in Verbindung mit einer Gasturbine bedeutet dies, dass der Verdichter der inversen Turbine im Verhältnis zu dem Verdichter der Gasturbine so dimensioniert und angeordnet werden muss, dass er - im Gegensatz zu einem Abgasturbolader - keinen Überdruck erzeugt, sondern lediglich an seiner Eingangsseite einen Unterdruck gegenüber seiner Ausgangsseite erzeugt, die ihrerseits auf dem Niveau des Umgebungsdrucks liegt.

Analog ist die inverse Turbine auch im Falle eines Verbrennungsmotors an den Abgasstrom des Motors anzupassen und so zu betreiben, dass der Unterdruck am Ausgang der Expansionsstufe der inversen Turbine erzeugt wird.

Der Eingang der Expansionsstufe ist dabei mit dem Abgaskanal einer vorgeschalteten Verbrennungskraftmaschine verbunden um die im Abgas enthaltene Energie für den Antrieb der Turbine zu nutzen Die nunmehr aufgrund eines durch den Verdichter erzeugten höheren Druck- und Temperaturgefälles in der Expansionsstufe umgesetzte Energie wird nur zum Teil durch den Verdichter der inversen Turbine verbraucht, der auf einem niedrigeren Temperaturniveau arbeitet und gegen ein geringeres Druckgefälle arbeiten bzw. einen geringen Druckanstieg, nämlich nur auf Umgebungsdruck, erzeugen muss. Die verbleibende Energie der Expansionsstufe kann für den Antrieb weiterer Aggregate genutzt werden. Dies gilt zumindest für Abgase, die vor dem Eintritt in die Expansionsstufe einen Druck oberhalb des Umgebungsdruckes haben.

Besondere Vorteile der erfindungsgemäßen Vorrichtung ergeben sich weiterhin aus einer Zwischenkühlung des Arbeitsgases zwischen Expansionsstufe und Verdichter, weil dadurch das Druckgefälle über der Expansionsstufe erhöht wird, ohne hierfür die Leistung des Verdichters erhöhen zu müssen.

Unter "Turbinenstufe" bzw. Expansionsstufe" wird hier jede Turbine oder jeder Teil einer Turbine verstanden, die bzw. der in einem Arbeitsgas enthaltene Energie durch Entspannung und Abkühlung in Bewegungsenergie umsetzt. Dabei kann es sich um einen oder auch mehrere durch das Arbeitsgas angetriebene Schaufelkränze handeln und auch eine Mehrzahl von Turbinenstufen bzw. Expansionsstufen kann ihrerseits wieder als eine "Turbinenstufe" im Sinne der Erfindung angesehen werden.

Zur besseren Unterscheidung wird hier bezüglich der inversen Turbine deren Eingangsstufe ausschließlich als "Expansionsstufe" bezeichnet.

Die Erfindung eignet sich daher besonders für die Verbesserung des Wirkungsgrades herkömmlicher Turbinen, insbesondere Gasturbinen, denen die erfindungsgemäße Vorrichtung einfach nachgeschaltet wird, wobei die Expansionsstufe und der Verdichter der inversen Turbine auch auf einer mit der vorgeschalteten Maschine, insbesondere einer Gasturbine, gemeinsamen Welle montiert sein können.

Wegen der gegenüber einer herkömmlichen Gasturbine umgekehrten Anordnung von Turbinenstufe und Verdichter wird die erfindungsgemäße Vorrichtung hier als "inverse Turbine" bezeichnet. Insbesondere kann die inverse Turbine unmittelbar an den Ausgang einer herkömmlichen Gasturbine angeschlossen werden und ggf. auch auf derselben Welle montiert werden. Dabei ist es insbesondere auch möglich, dass der hier als "Expansionsstufe" bezeichnete Eingangsteil der inversen Turbine, konkret der durch die Entspannung von warmem oder heißem Gas angetriebene Rotor, seinerseits die Endstufe einer herkömmlichen Gasturbine ist, die demnach unmittelbar mit einem bei Gasturbinen im Allgemeinen nicht vorhandenen weiteren Verdichter verbunden ist, der am Ausgang der letzten Turbinenstufe einen zusätzlichen Unterdruck erzeugt und damit die Energieausbeute steigert.

Allerdings wird die zusätzliche Energieausbeute in aller Regel höher, wenn der herkömmlichen Gasturbine eine vollständige inverse Turbine nachgeschaltet wird, d.h. eine Vorrichtung mit einer eigenen Turbinenstufe und einem Verdichter, die aufeinander abgestimmt sind und die zur optimalen Energienutzung in der Regel größer dimensioniert sein oder - soweit möglich - mit höherer Drehzahl betrieben werden sollten als eine typische letzte Stufe einer herkömmlichen Gasturbine. Um beispielsweise die Strömungsgeschwindigkeit herabzusetzen, die bei manchen Gasturbinen ansonsten in den Bereich der Schallgeschwindigkeit des Gases kommen könnte, ist aber auch der Betrieb der Inversen Turbinen mit der gegenüber der vorgeschalteten Turbinenstufe gleichen oder einer geringeren Drehzahl möglich. Die inverse Turbine muss dann allerdings mit einem entsprechend größeren Volumen ausgelegt werden.

Wie schon erwähnt, bezieht sich der Begriff "Expansionsstufe" im Folgenden ausschließlich auf die erste Stufe der inversen Turbine, insbesondere einen Rotor mit Turbinenschaufeln, zwischen denen sich ein warmes Gas entspannt und abkühlt und dabei den Rotor antreibt. Herkömmliche Turbinen, unter denen man im Allgemeinen die Kombination aus Verdichter, Brennkammer und Rotor mit mehreren Turbinenstufen versteht, werden im Folgenden als "Gasturbine" und die einzelnen Stufen des Rotors als "Turbinenstufen" "Schaufelkränze" oder Gruppen von Schaufelkränzen bezeichnet.

Wie bereits erwähnt, kann man die Erzeugung des Unterdrucks bzw. Vakuums am Ausgang der Expansionsstufe noch dadurch deutlich verbessern, dass zwischen dem Ausgang der Expansionsstufe und dem Eingang des Verdichters ein Zwischenkühler für das hindurchtretende Gas vorgesehen ist.

In einer Ausführungsform sind die Expansionsstufe und der Verdichter derart auf einer gemeinsamen Welle montiert, dass sie sich gemeinsam mit derselben Geschwindigkeit drehen. Die bei unterschiedlichem Druckgefälle und unterschiedlichen Temperaturen durchgesetzten Gasmengen können dabei durch die geometrische Auslegung der Expansionsstufe und des Verdichters, konkret durch den Durchmesser des Rotors sowie die Zahl, Größe, Anordnung und Form der Turbinen- und Verdichterschaufeln, angepasst werden.

Ansonsten kann man jedoch den gleichmäßigen und optimierten Gasdurchsatz unter Erhalt des gewünschten Druckgefälles auch dadurch herstellen, dass der Verdichter über ein zwischengeschaltetes Getriebe mit der Turbinenwelle verbunden ist. Auch dabei können Expansionsstufe, und Verdichter, gegebenenfalls auch die Ausgangsstufe einer vorgeschalteten Gasturbine oder eine Motorwelle, um dieselbe Achse drehbar montiert sein und die relative Drehbarkeit der einzelnen Aggregate wird dadurch hergestellt, dass sie teilweise Hohlwellen aufweisen, die die Welle eines anderen Aggregates abschnittsweise umfassen und drehbar auf dieser gelagert sind.

Wie bereits erwähnt, kann bei der inversen Turbine die Rolle der Expansionsstufe auch durch die letzte Stufe einer herkömmlichen Gasturbine übernommen werden, was den Aufbau etwas vereinfacht und verkürzt, auch wenn dabei die Abwärme noch nicht optimal genutzt wird.

Im Übrigen kann die Expansionsstufe der inversen Turbine Einrichtungen zum Verbrennen zusätzlichen Brennstoffs und, soweit vorhanden, eventuell auch unvollständig verbrannter Abgase aufweisen. Dabei wird die Brennstoffzufuhr vorzugsweise auf eine isotherme Verbrennung eingestellt. Die nachgeschaltete Expansionsstufe kann dementsprechend durch weiteres Verbrennen von Brennstoff und der noch nicht umgesetzten Bestandteile des Abgases zusätzliche Energie gewinnen. Da das Abgas beim Eintritt in die Expansionsstufe der inversen Turbine noch sehr heiß ist, lässt sich die zusätzliche Brennstoffzufuhr nahezu beliebig einstellen und drosseln, ohne den Verbrennungsvorgang zu beeinträchtigen.

Insbesondere kann die Expansionsstufe bzw. der Rotor der inversen Turbine eine eigene Brennkammer aufweisen.

Zum Kühlen des Arbeitsgases, insbesondere zwischen Expansionsstufe und Verdichter ist in einer Ausführungsform vorgesehen, dass die Expansionsstufe und/oder der Verdichter mindestens ein Leitrad aufweisen, dessen Inneres mindestens teilweise von einem Kühlmittel durchströmt wird. Entsprechende Leiträder könnten beispielsweise am Ausgang der Expansionsstufe oder am Eingang des Verdichters vorgesehen sein.

Die Erfindung betrifft auch ein Verfahren zur Nutzung von Abwärme in einem gasförmigen Medium mit einer Vorrichtung nach einem der vorstehenden Ansprüche, wobei die Expansionsstufe durch das Abgas einer Verbrennungskraftmaschine und gegebenenfalls die Verbrennung zusätzlichen Brennstoffs angetrieben wird, welche der Expansionsstufe als Arbeitsgas dienen.

Ohne die Verbrennung zusätzlichen Brennstoffs wäre eine solche Arbeitsweise grundsätzlich von dem Betrieb eines Abgasturboladers bekannt.

Zur direkten Nutzung der Antriebsenergie aus der Turbinenstufe ist jedoch gemäß der vorliegenden Erfindung vorgesehen, dass mindestens ein Teil des Abgasstromes einer Verbrennungskraftmaschine als Arbeitsgas durch die Expansionsstufe der Vorrichtung hindurchgeleitet wird und der Ausgang des Verdichters auf dem Druckniveau der Umgebung gehalten wird.

In weiterer Ausgestaltung des erfindungsgemäßen Verfahrens erfolgt zwischen Expansionsstufe und Verdichter eine zusätzliche Kühlung des Arbeitsgases.

Weitere Vorteile, Merkmale und Anwendungsmöglichkeiten der vorliegenden Erfindung werden deutlich anhand der folgenden Beschreibung einer bevorzugten Ausführungsform und der dazu gehörigen Figuren.
- Figur 1: zeigt schematisch den Aufbau einer herkömmlichen Gasturbine mit Verdichter, Brennkammer und Turbinenrotor.
- Figur 2: zeigt das Schema der herkömmlichen Gasturbine nach Figur 1 zusammen mit einer nachgeschalteten inversen Turbine.
- Figur 3: zeigt ein thermodynamisches TS-Diagramm zu der Kombination nach Figur 2
- Figur 4: zeigt das Schema einer Kombination ähnlich der Kombination nach Figur 2, jedoch mit einer weiteren, der inversen Turbine vorgeschalteten Brennkammer für die vollständige Verbrennung von Abgasen und
- Figur 5: zeigt den Aufbau eines Flugzeugtriebwerks mit nachgeschalteter inverser Turbine.

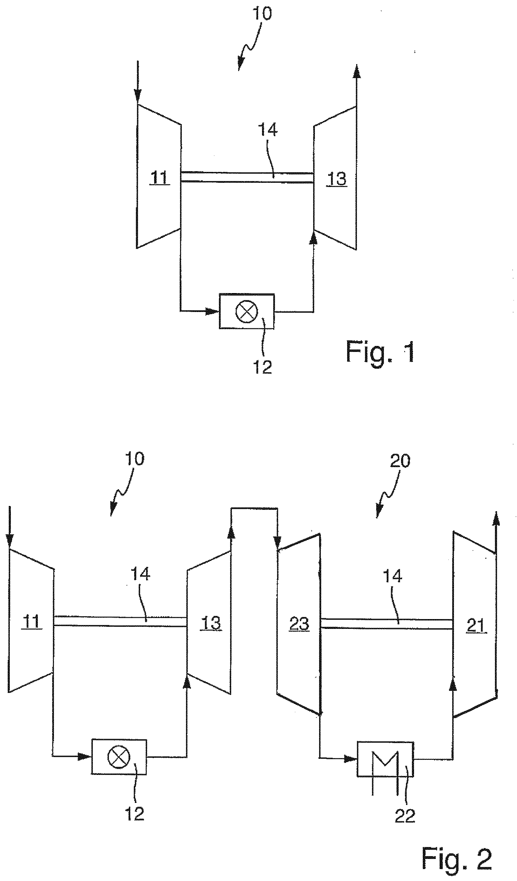

Figur 1 zeigt zunächst das Schema einer klassischen Gasturbine 10, die im Wesentlichen aus Verdichter 11, einer nicht dargestellten Brennkammer und der Turbinenstufe 13 besteht und die in einem entsprechenden Turbinengehäuse zum Beispiel auf einer gemeinsamen Welle montiert sind.

In die Brennkammer wird ein gasförmiger Brennstoff oder Sprühnebel aus Brennstoff eingespritzt und gezündet, so dass die Verbrennungsgase die Turbinenstufe 13 antreiben. Diese wiederum sitzt auf einer gemeinsamen Welle 4 mit dem vorgeschalteten Verdichter 1 und treibt diesen an, der dadurch zusätzliche Verbrennungsluft verdichtet und in die Brennkammer drückt

Die entsprechende inverse Turbine 20, die erfindungsgemäß der Turbine 10 nach Figur 1 nachgeschaltet werden könnte, ist in Figur 2 dargestellt und besteht eingangsseitig aus einer Expansionsstufe 23, gefolgt von einem Zwischenkühler 22 und daran anschließend einem Verdichter 21.

Der nur schematisch dargestellte Zwischenkühler kann z. B. realisiert werden als Wärmetauscher, z. B. durch Kühlleitungen, die im Inneren eines oder mehrerer Leiträder sowie eines Expansionsstufen- bzw. Verdichtergehäuses verlaufen.

Das aus der letzten Stufe 13 des Turbine 10 austretende heiße Abgas wird der Expansionsstufe 23 der inversen Turbine 20 zugeführt, die dadurch angetrieben wird und seinerseits über eine gemeinsame Welle 24 den Verdichter 21 antreibt, dessen Eingangsseite mit der Ausgangsseite der Expansionsstufe 23 verbunden ist. Dadurch wird am Ausgang der Expansionsstufe 23 ein Unterdruck erzeugt, sodass das erhöhte Druckgefälle eine Leistungssteigerung des Rotors der Expansionsstufe 23 bewirkt. Ein Teil dieser zusätzlichen Leistung wird verbraucht durch den nachgeschalteten Verdichter 21, der allerdings auf einem niedrigeren Temperaturniveau und mit einem niedrigeren Druckgefälle bzw. einem geringeren Druckanstieg das Abgas wieder auf den Umgebungsdruck verdichtet und dementsprechend einen zur Umgebung hin offenen Verdichterausgang 21 b aufweist. Das durch den Zwischenkühler 22 erreichte niedrigere Temperaturniveau erlaubt eine Vergrößerung des Druckgefälles..

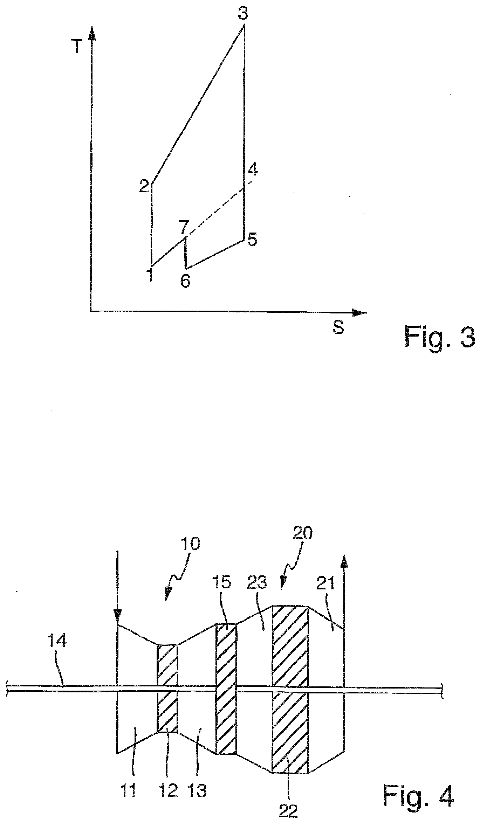

Figur 3 veranschaulicht den zusätzlichen Energiegewinn idealisiert in einem schematischen Temperatur-Entropie-Diagramm (TS-Diagramm).

Der adiabatischen Kompression durch einen Verdichter zwischen den Punkten 1 und 2 in dem TS-Diagramm folgt die Zuvor von Wärme und der Erhöhung Druck und Temperatur von dem Punkt 2 zu dem Punkt 3. Die folgende adiabatische Entspannung würde ohne nachgeschaltete inverse Turbine bei dem Punkt 4 enden, worauf wiederum eine Abkühlung unter Reduzierung von Druck und Temperatur zu dem Punkt 1 hin erfolgen würde.

Die inverse Turbine bzw. der nachgeschaltete Verdichter der inversen Turbine erlaubt eine stärkere adiabatische Expansion zu dem Punkt 5, von wo wiederum Gas entlang des Pfades von Punkt 5 zu Punkt 6 abgekühlt und anschließend durch den Verdichter von dem Punkt 6 auf eine etwas höhere Temperatur bei Punkt 7 angehoben wird, von wo aus dann der Kreislauf bei 1 erneut beginnen kann.

Damit wird eine zusätzliche Energiemenge, die in dem TS-Diagramm der Fläche des durch die Punkte 4, 5, 6 und 7 aufgespannten Rechtecks entspricht, gewonnen.

Figur 2 zeigt das Schema einer mit einer klassischen Turbine kombinierten inversen Turbine, wobei die inverse Turbine im Falle des typischerweise geringeren Druck- und Temperaturgefälles im Abgas größer dimensioniert ist. Dieser Effekt wird allerdings teilweise auch durch die geringere Temperatur der Abgase kompensiert, so dass die Inverse Turbine in der Praxis oft nicht oder nur wenig größer dimensioniert werden muss als die vorgeschaltete klassische Gasturbine. Alternativ kann die Drehzahl der inversen Turbine 11 gegenüber der Drehzahl der vorgeschalteten Gasturbine 10 erhöht werden, beispielsweise durch ein zwischengeschaltetes Getriebe, und auch die Drehzahl des Verdichters 21 kann bei entsprechender Ausgestaltung von der Drehzahl der Expansionsstufe 23 abweichen.

Ein weiteres Beispiel ist eine Kombination mit einer zusätzlich zwischen der klassischen Gasturbine und der inversen Turbine vorgesehenen Brennkammer gemäß Figur 4, wobei diese Variante hier als "Crossover-Turbine" bezeichnet wird und wobei die zusätzliche Brennkammer vor allem der vollständigeren Verbrennung der Abgase aus der Brennkammer der ersten Turbine dienen soll, zusätzlich aber auch mit weiteren Brennstoffen versorgt werden kann. Dies ermöglicht wegen der höheren Temperaturen eine deutliche Leistungssteigerung auch wenn die Maße der inversen Turbine gegebenenfalls entsprechend zu vergrößern sind. Zweckmäßigerweise ist die inverse Turbine auf einer von der Welle 14 der Gasturbine getrennten Welle 24 montiert, um die Drehzahlen der herkömmlichen Turbine und der inversen Turbine in Anbetracht der vorliegenden Druck-, Temperatur- und Strömungsverhältnisse im Allgemeinen unterschiedlich einzustellen.

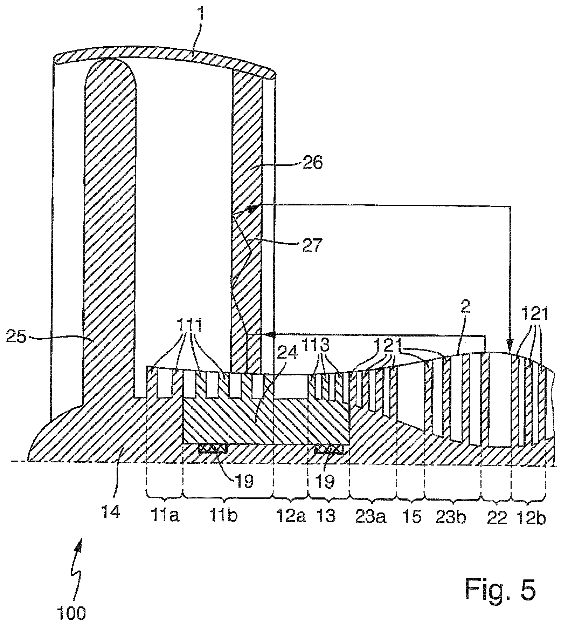

Figur 5 ist eine zwar immer noch schematische aber gegenüber den übrigen Figuren etwas realitätsnähere Darstellung wesentlicher Komponenten eines Flugzeugtriebwerks 100 mit einer nachgeschalteten inversen Turbine.

Das Flugzeugtriebwerk 100 gemäß Figur 5 weist ein äußeres Gehäuse 1 und ein inneres Gehäuse 2 auf, die über ein Leitrad 26 miteinander verbunden sind, das aus über den Umfang verteilten Leitschaufeln 26a besteht, die nach Art von Speichen das innere Gehäuse 2 und das äußere Gehäuse 1 miteinander verbinden. Im inneren Gehäuse 2 ist eine erste Welle 14, die mehrere verschiedene Schaufelkränze 111, 123 und 122 trägt, drehbar gelagert. Auf der ersten Welle 14 ist außerdem in einem ausgesparten Abschnitt eine zweite Welle 24 gelagert, die ebenfalls einen Teil der Kränze 111 sowie Schaufelkränze 113 trägt. Zwei schematische dargestellte Lager 19 veranschaulichen die Drehbarkeit der Welle 24 gegenüber der Welle 14. Die drehbare Lagerung der Welle 14 am Gehäuse 2 und/oder 1 ist hier nicht dargestellt. Zu verschiedenen Verdichter- und Turbinenstufen gehören jeweils ein oder mehrere Schaufelkränze, die teils auf der Welle 14 und teils auf der Welle 24 angeordnet sind.

Am vorderen Ende der Welle 14 ist ein sogenannter Fan 25, d.h. ein Schaufelkranz mit größerem Durchmesser angeordnet, der den Innendurchmesser des äußeren Gehäuses 1 im Wesentlichen ausfüllt. Der Fan wird von der ersten Welle 14 angetrieben, Das Leitrad besteht aus einem Kranz von Leitschaufeln, die aber starr zwischen Gehäuse 1 und innerem Gehäuse 2 angeordnet sind und dazu dienen, den von dem Fan erzeugten Luftstrom optimal entlang der Achse auszurichten, um einen maximalen Schubbeitrag zu leisten.

Die Lagerung der Welle 14 im inneren Gehäuse ist hier nicht dargestellt, kann aber beispielsweise in dem Bereich einer Kühlkammer 22 und am vorderen Ende der Welle 14 hinter dem Fan und jeweils an dem inneren Gehäuse 2 erfolgen.

Mindestens ein Teil der Schaufeln 26a weist innere Kühlkanäle 27 auf, die dazu dienen, ein Kühlmittel im Inneren der Leitradschaufeln abzukühlen, welches über das innere Gehäuse 2 in den Bereich der Kühlkammer 22 geführt wird und zusätzlich gegebenenfalls auch durch starre Leitschaufeln oder Speichen im Bereich der Kühlkammer 22 zirkulieren kann. Der Kühlmittelfluss ist in Figur 5 ansonsten lediglich schematisch außerhalb des Gehäuses 2 dargestellt.

Die einzelnen, entlang der Achse aufeinanderfolgenden Komponenten können jeweils mehr oder weniger Schaufelkränze aufweisen als hier dargestellt sind und auch die axiale Länge des Triebwerks im Verhältnis zum Durchmesser ist hier nicht notwendigerweise im korrekten Verhältnis wiedergegeben.

Im Wesentlichen besteht das Triebwerk aus einem Niederdruckverdichter 11a, der durch Schaufelkränze 111 auf der ersten Welle 14 gebildet wird, einen anschließenden Hochdruckverdichter 11 b, der durch analoge Schaufelkränze 111 auf der zweiten Welle 24 gebildet wird, eine Brennkammer 12a, die auf den Hochdruckverdichter 11 b folgt, ein Hochdruckturbinenabschnitt 13a, der mit Schaufelkränzen 113 bestückt ist und schließlich gefolgt von Niederdruckturbine 23a. Die Niederdruckturbine 23a würde das axial hintere Ende eines klassischen Flugzeugtriebwerks bilden, wobei, wie gesagt, die Zahl der Schaufelkränze 123 auch größer und der Niederdruckturbinenabschnitt länger sein könnte, sodass er beispielsweise auch noch den Bereich 23b umfassen würde.

Die Bereiche 23a und 23b sind hier aber bewusst getrennt dargestellt, wobei der Abschnitt 23a der Niederdruckturbine des klassischen Triebwerks zugerechnet wird, während der Bereich 23b als Turbinenabschnitt einer inversen Turbine anzusehen ist, auf welchen abschließend noch ein Verdichter 20 mit Schaufelkränzen 121 folgt. Zwischen dem Ausgang der Niederdruckturbine 23a und dem Eingang der inversen Turbine 23b befindet sich eine weitere Brennkammer 15, die der vollständigen Verbrennung von bis dahin nicht verbrannten Bestandteilen dient. Wahlweise könnte hier auch zusätzlicher Brennstoff eingespritzt werden. In dem Turbinenabschnitt 23b der inversen Turbinen und dem Verdichter 21 der inversen Turbine befindet sich noch eine Kühlkammer 22, die dazu dient, die schon weitgehend entspannten aber immer noch heißen Abgase aus der inversen Turbine 23b weiter abzukühlen, was zusätzlich zu der Wirkung des Verdichters 21 einen Unterdruck hinter dem Turbinenabschnitt 23b erzeugt und es ermöglicht, den Gasstrom mit geringerer Verdichtungsleistung aufrecht zu erhalten.

Die Laufkränze 111, 123 und 121 auf der ersten Welle 14 sind für geringe Umlaufgeschwindigkeiten ausgelegt, während die Laufkränze 111 und 113 auf der zweiten Welle 24, die auf der inneren Welle 14 oder aber im Bereich der Brennkammer 12a gelagert sein kann, eine größere Umlaufgeschwindigkeit haben.

Der von der Hochdruckturbine erzeugte Strom treibt jedoch über die Laufkränze 123 die erste Welle 14 an, die ihrerseits den Fan antreibt, der den Hauptteil des Gesamtschubes erzeugt.

Mit der zusätzlichen Entspannung des Arbeitsgases in der Expansionsstufe 23b der inversen Turbine und der nachfolgenden Verdichtung wird zusätzlicher Schub erzeugt, was die Effizienz des Triebwerks um einige Prozent erhöht und den Treibstoffverbrauch entsprechend mindert.

### Bezugszeichenliste

- 1: äußeres Gehäuse
- 2: Brennkammer
- 3: Turbinenrotor
- 4: Welle
- 6: Gasturbine
- 10: Gasturbine
- 11: Turbinenrotor
- 11 a: Niederdruckverdichter
- 11b: Hochdruckverdichter
- 12a: Brennkammer
- 13: Verdichter
- 13a: Hochdruckturbinenabschnitt
- 14: Welle
- 15: Brennkammer
- 16: erste Welle
- 19: Gasturbine
- 20: inverse Turbine
- 21: Verdichter
- 21b: Verdichterausgang
- 22: Zwischenkühler
- 23: Expansionsstufe
- 23a: Niederdruckturbine
- 23b: Turbine
- 24: zweite Welle
- 25: Fan
- 26: Leitrad
- 26a: Leitschaufeln
- 27: Kanäle
- 100: Flugzeugtriebwerk
- 111: Laufkranz; Schaufelkranz
- 113: Laufkranz; Schaufelkranz
- 121: Laufkranz; Schaufelkranz
- 122: Schaufelkranz
- 123: Laufkranz; Schaufelkranz

## Patentansprüche

1. Verfahren zur Nutzung der im Abgas einer Verbrennungskraftmaschine enthaltenen Abwärme, mit einer Turbine (1o), **dadurch gekennzeichnet, dass** mindestens ein Teil des Abgases eine inverse Turbine (20) beaufschlagt, die eingangsseitig aus einer Expansionsstufe (23) und ausgangsseitig aus einem nachfolgenden Verdichter (21) besteht, wobei die Expansionsstufe und der Verdichter der inversen Turbine in der Weise betrieben werden, dass der nachgeschaltete Verdichter der inversen Turbine am Ausgang der Expansionsstufe (23) einen Unterdruck (p1) unterhalb des Umgebungsdruckes (p0) erzeugt, wobei der Ausgang (2b) des Verdichters (21) auf dem Niveau des Umgebungsdrucks liegt und der Verdichter durch die Turbine angetrieben wird.

2. Verfahren nach Anspruch 1, **dadurch gekennzeichnet, dass** es auf eine Gasturbine angewendet wird, wobei das Druckverhältnis des Verdichters der Gasturbine auf mindestens 10, vorzugsweise auf mindestens 15 eingestellt wird, und das Druckverhältnis zwischen dem Ausgang und dem Eingang der Expansionsstufe auf mindestens 10 vorzugsweise auf mindestens 15 eingestellt wird.

3. Verfahren nach Anspruch 1 oder 2, **dadurch gekennzeichnet, dass** der Unterdruck am Ausgang der Expansionsstufe der inversen Turbine durch Zwischenkühlung mit Hilfe eines Zwischenkühlers, insbesondere eines Wärmetauschers unterstützt wird.

4. Verfahren nach einem der Ansprüche 1 -3, **dadurch gekennzeichnet, dass** die inverse Turbine mir einer von der Drehzahl der vorgeschalteten Turbine abweichenden Drehzahl betrieben wird.

5. Vorrichtung zur Nutzung der im Abgas einer Verbrennungskraftmaschine enthaltenen Abwärme, mit einer Turbine (11, 13), **dadurch gekennzeichnet, dass** die Turbine eine inverse Turbine ist, die dem Abgasausgang der Verbrennungskraftmaschine nachgeschaltet ist, und die eingangsseitig aus einer Expansionsstufe (23) und ausgangsseitig aus einem nachfolgenden Verdichter (21) besteht, wobei die Expansionsstufe und der Verdichter der inversen Turbine so ausgelegt sind, dass der nachgeschaltete Verdichter der inversen Turbine am Ausgang der Expansionsstufe (23 einen Unterdruck (p1) unterhalb des Umgebungsdruckes (p0) erzeugt, wobei der Ausgang (2b) des Verdichters (2) auf dem Niveau des Umgebungsdrucks liegt und der Verdichter der Inversen Turbine durch die Turbine angetrieben wird.

6. Vorrichtung nach Anspruch 5, **dadurch gekennzeichnet, dass** die Expansionsstufe (1) und der Verdichter (2) sich um dieselbe Achse drehen und vorzugsweise auf einer gemeinsamen Welle (4) montiert sind.

7. Vorrichtung nach einem der vorstehenden Ansprüche 5 oder 6, **dadurch gekennzeichnet, dass** der Verdichter (2) über ein zwischengeschaltetes Getriebe (5) mit der Turbinenwelle verbunden ist.

8. Vorrichtung nach einem der vorstehenden Ansprüche 5 - 7, **dadurch gekennzeichnet, dass** das Volumen des Verdichters (11 )und der Expansionskammer (13) der Turbine jeweils um einen Faktor 1,2 - 4, vorzugsweise um einen Faktor 1,2 - 2,5, kleiner ist als das Volumen von Verdichter (21) und Expansionsstufe (23) der inversen Turbine.

9. Vorrichtung nach einem der vorstehenden Ansprüche 6 - 12, **dadurch gekennzeichnet, dass** die Expansionsstufe und/oder der Verdichter mindestens ein Leitrad aufweisen, dessen Inneres mindestens teilweise von einem Kühlmittel durchströmt wird.

10. Vorrichtung nach einem der vorstehenden Ansprüche 6 - 13, **dadurch gekennzeichnet dass** die Expansionsstufe (1) der letzten Stufe einer Gasturbine (6) nachgeschaltet ist und durch das Abgas der Gasturbine (6) sowie das durch den Verdichter (2) erzeugte Druckgefälle angetrieben wird.

11. Kombination einer Gasturbine (19) mit einer inversen Turbine (20) nach einem der Ansprüche 1 -10, **dadurch gekennzeichnet, dass** hinter dem Ausgang der Gasturbine und beispielsweise vor oder in der der inversen Turbine Einrichtungen für die Zufuhr zusätzlichen Brennstoffs vorgesehen sind.

12. Vorrichtung nach einem der vorstehenden Ansprüche 6 -15, **dadurch gekennzeichnet dass** die Expansionsstufe (1) mit einem Abgasauslass eines Verbrennungsmotors verbunden ist und durch das Abgas des Verbrennungsmotors sowie das durch den Verdichter (2) erzeugte Druckgefälle angetrieben wird.

13. Flugzeugtriebwerk, **gekennzeichnet durch** eine Vorrichtung nach einem der Ansprüche 6 bis 15.

14. Flugzeugtriebwerk nach Anspruch 17 mit einem äußeren Gehäuse 1 und einem inneren Triebwerksgehäuse 2, zwischen welchen Stützelemente und ein stationäres Leitrad (26) vorgesehen sind, wobei ein von einer ersten Turbinenwelle (14) angetriebener Fan (25) einen axialen Luftstrom zwischen dem äußeren (1) und dem inneren Gehäuse (2) erzeugt, **dadurch gekennzeichnet, dass** an dem von dem Fan abgewandten en Ende der Turbinenwelle (14) eine inverse Turbine (23b) mit einem abschließenden Verdichter (21) und einer dazwischen angeordneten Kühleinrichtung (22) vorgesehen ist.

15. Flugzeugtriebwerk nach Anspruch 17 mit einem Wärmetauscher zwischen der Expansionsstufe und dem Verdichter einer inversen Turbine, wobei Kühlleitungen durch das Gehäuse und gegebenenfalls durch in der Kühleinrichtung vorgesehenen Leiträder und in Leitradschaufeln verlaufen und ein Kühlmittel enthalten, um Abgase in der Kühlkammer (22) zu kühlen.
